# EUROPEAN PATENT APPLICATION

(11) **EP 4 759 399 A2**
(43) Date of publication of application: **17.06.2026**
(21) Application number: 25215910.8
(22) Date of filing: 14.11.2025
(51) Int. Cl.: B01D 53/04

(54) **ATMOSPHERIC CARBON DIOXIDE CAPTURE SYSTEM**

(30) Priority: 26.11.2024 US 202418960078
(71) Applicant: Robert Bosch GmbH, 70442 Stuttgart (DE)
(72) Inventor: Schmidt, Helmut, 74321 Bietigheim-Bissingen (DE); Gorlin, Yelena, Menlo Park,California, 94025 (US); Baldizzone, Claudio, 70174 Stuttgart (DE)

(57) **Abstract**

A direct air capture (DAC) of CO₂ system includes a reaction reactor having a solid, amine-functionalized sorbent configured to sequester CO₂ from air; an in-situ dual-function device configured as a CO₂ conversion reactor and an exchange fluid regeneration device; and the exchange fluid, recirculating between the reaction reactor and the dual-function device, configured to capture the sequestered CO₂ from the solid sorbent in the reaction reactor and release the captured CO₂ in the conversion reactor, the exchange fluid including one or more amino acids.

## Description

### TECHNICAL FIELD

The present disclosure relates to systems and methods for capturing of atmospheric carbon dioxide (CO₂) using a solid sorbent, regeneration of the solid sorbent using an exchange fluid, and regeneration of the exchange fluid in an in-situ CO₂ conversion reactor.

### BACKGROUND

CO₂ is a notorious greenhouse gas whose emissions have been sharply on the rise since the Industrial Revolution began in the 18^{th} century. Since then, CO₂ emissions have been a confirmed culprit in climate change around the world. Recent findings of the International Panel on Climate Change have proposed that CO₂ emissions should be halved by 2030 to avoid further negative impact on the planet. Various technologies have been developed to capture CO₂ such as atmospheric CO₂, but their drawbacks prevent realization of more widespread CO₂ sequestration.

### SUMMARY

In one or more embodiments, a direct air capture (DAC) of CO₂ system is disclosed. The system may include a reaction reactor having a solid, amine-functionalized sorbent configured to sequester CO₂ from air; an in-situ dual-function device configured as a CO₂ conversion reactor and an exchange fluid regeneration device; and the exchange fluid, recirculating between the reaction reactor and the dual-function device, configured to capture the sequestered CO₂ from the solid sorbent in the reaction reactor and release the captured CO₂ in the conversion reactor, the exchange fluid including one or more amino acids. The CO₂ conversion reactor may include one or more catalysts to facilitate a thermochemical reaction consuming the captured CO₂. The system may produce a non-CO₂ gaseous end-product having a carbon atom from the sequestered CO₂. The CO₂ conversion reactor may include one or more heating elements for a thermochemical reaction consuming the captured CO₂. The one or more amino acids may include an L-form of the one or more amino acids. The exchange fluid may be supplied as at least two separate volumes having different chemical composition. The reaction reactor and the dual-function device may be connected by one or more exchange fluid conduits. The exchange fluid regeneration and the CO₂ conversion reaction may be consecutive reactions within a same volume of the dual-function device.

In another embodiment, a regeneration reactor of a direct air capture (DAC) system is disclosed. The reactor may include a container having a first inlet structured for ingress of sequestered CO₂-enriched amino acid-based exchange fluid; a second inlet for ingress of one or more catalysts facilitating a reaction consuming the incoming CO₂; one or more heating elements; and an outlet for egress of a non-CO₂ gaseous end-product having a carbon atom from the sequestered CO₂. The first inlet may be also structured as an outlet for egress of amino acid-based exchange fluid from the container. The amino acid-based exchange fluid may include a mixture of amino acids. The container may be a pressurized container. The regeneration reactor may further include an internal volume structured to facilitate a removal of CO₂ from the exchange fluid and CO₂ conversion into the non-CO₂ gaseous end-product having the carbon atom from the sequestered CO₂. The container may be a mineralization device. The container may be an electrochemical cell.
In yet another embodiment, a direct air capture (DAC) system is disclosed. The system may include a reaction reactor including an amine-functionalized solid sorbent configured to sequester CO₂ with a first affinity for CO₂; an ingress of atmospheric air including CO₂ to be sequestered; and a regenerable exchange fluid configured to bind CO₂ with a second affinity for CO₂, the second affinity being greater than the first affinity, the exchange fluid including one or more amino acids. The system may also include an in-situ regeneration reactor configured to remove a predetermined amount of CO₂ from the exchange fluid. The regeneration reactor may include one or more compounds reacting with the CO₂ removed from the exchange fluid to generate a non-CO₂ end-product and including a carbon atom from the CO₂. The system may also include an outlet for air having a lower concentration of CO₂ than the atmospheric air entering the system. The CO₂ in the exchange fluid may be bound in a form or carbamate, bicarbonate, or their combination.

### BRIEF DESCRIPTION OF THE DRAWINGS

FIGURE 1 is a schematic view of a non-limiting example of an atmospheric CO₂ capture system;
FIGURE 2 is a schematic view of a variation of a non-limiting example atmospheric CO₂ capture system according to one or more embodiment disclosed herein;
FIGURE 3 is a schematic view of another variation of a non-limiting example atmospheric CO₂ capture system according to one or more embodiment disclosed herein; and
FIGURE 4 is a schematic view of another variation of a non-limiting example atmospheric CO₂ capture system according to one or more embodiment disclosed herein.

### DETAILED DESCRIPTION

Embodiments of the present disclosure are described herein. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except in the examples, or where otherwise expressly indicated, all numerical quantities in this description indicating amounts of material or conditions of reaction and/or use are to be understood as modified by the word "about" in describing the broadest scope of the disclosure. Practice within the numerical limits stated is generally preferred. Also, unless expressly stated to the contrary: percent, "parts of," and ratio values are by weight; the description of a group or class of materials as suitable or preferred for a given purpose in connection with the disclosure implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed. Unless stated otherwise, the wt.% is based on the total weight of the substrate and the vol.% is based on the total volume of the substrate.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. Generally, the term "about" denoting a certain value is intended to denote a range within +/- 5% of the value. As one example, the phrase "about 100" denotes a range of 100+/- 5, *i.e.* the range from 95 to 105. Generally, when the term "about" is used, it can be expected that similar results or effects according to the disclosure can be obtained within a range of +/- 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4, ..., 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits. Similarly, whenever listing integers are provided herein, it should also be appreciated that the listing of integers explicitly includes ranges of any two integers within the listing.

In the examples set forth herein, concentrations, temperature, and reaction conditions *(e.g.,* pressure, pH, flow rates, *etc*.) can be practiced with plus or minus 50 percent of the values indicated rounded to or truncated to two significant figures of the value provided in the examples. In a refinement, concentrations, temperature, and reaction conditions (e.g., pressure, pH, flow rates, *etc*.) can be practiced with plus or minus 30 percent of the values indicated rounded to or truncated to two significant figures of the value provided in the examples. In another refinement, concentrations, temperature, and reaction conditions *(e.g.,* pressure, pH, flow rates, *etc*.) can be practiced with plus or minus 10 percent of the values indicated rounded to or truncated to two significant figures of the value provided in the examples.

As used herein, the term "and/or" means that either all or only one of the elements of said group may be present. For example, "A and/or B" means "only A, or only B, or both A and B". In the case of "only A," the term also covers the possibility that B is absent, *i.e.* "only A, but not B".

It is also to be understood that this disclosure is not limited to the specific embodiments and methods described below, as specific components and/or conditions may, of course, vary. Furthermore, the terminology used herein is used only for the purpose of describing particular embodiments of the present disclosure and is not intended to be limiting in any way.

The term "comprising" is synonymous with "including," "having," "containing," or "characterized by." These terms are inclusive and open-ended and do not exclude additional, unrecited elements or method steps. The term "including" or "includes" may encompass the phrases "comprise," "consist of," or "essentially consist of."

The phrase "consisting of" excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of" limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed subject matter can include the use of either of the other two terms.

The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Also, the description of a group or class of materials as suitable for a given purpose in connection with one or more embodiments implies that the group or class of materials can "comprise," "consist of," and/or "consist essentially of" any member or the entirety of that group or class of materials. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

The term "alkyl" refers to a monovalent alkane derived radical containing from 1 to 100 carbon atoms, or more preferably 1 to 40 carbon atoms, or even more preferably 1 to 20 carbon atoms unless otherwise defined. Alkyl groups may be linearly arranged, branched, or cyclic. A branched alkyl refers to an alkyl group in which an alkyl group is attached to a linear alky chain. An alkyl group may be a saturated or unsaturated hydrocarbon. In other words, alkyl may refer to an alkenyl or alkynyl. A saturated hydrocarbon refers to a hydrocarbon containing single bonds whereas, an unsaturated hydrocarbon refers to a hydrocarbon containing one or more double or triple bonds. Examples of alkyl groups include but are not limited to methyl, ethyl, propyl, isopropyl, butyl, isobutyl, sec-butyl, tert-butyl, pentyl, hexyl, octyl, ethenyl, propenyl, butenyl, pentenyl, hexenyl, octenyl, butadienyl, propynyl, butynyl, pentynyl, hexynyl, and allenyl groups. An alkyl group may also include cycloalkyl groups such as cyclopropyl, cyclopentyl, or cyclohexyl. Alkyl is intended to include isomers thereof. An alkyl group may be substituted with multiple substituent groups. A substituent group may refer to a non-hydrogen group. For example, a substituent group may be but is not limited to a halogen, a hydroxyl, an alkoxy, an acetyl, phenyl, amino group, heteroatom, or heteroatom group.

The term "alkoxy" refers to an alkyl ether or aryl ether such as methoxy, ethoxy, n-propoxy, iso-propoxy, n-butoxy, iso-butoxy, sec-butoxy, tert-butoxy, and phenoxy.

The term "aryl" refers to a carbon-containing aromatic ring such as phenyl and heteroaryl refers to a carbon ring where at least one carbon is replaced with a heteroatom such as a nitrogen atom, oxygen atom, or sulfur atom.

The term "alkylaryl" refers to an aryl where at least one of the hydrogen groups is replaced with an alkyl.

The term "amino" or "amine" refers to the group -NR'R" (or NRR'R") where R, R' and R" are independently selected from the group consisting of hydrogen, alkyl, aryl, alkylaryl, or heteroaryl.

The term "R" may refer to hydrogen, alkyl, aryl, alkylaryl, heteroatoms, alkoxy, heteroaryl unless otherwise stated.

Many are targeting global net zero carbon emissions to avoid, stop, or mitigate human impact on climate. One developing technology that may be useful to achieve the reduction of carbon emission is carbon capture utilization and storage (CCUS). Conventionally, this involves a process of separating carbon emissions such as CO₂ before they are released into the atmosphere for storage or further utilization, which may also be referred to as point source or point of source carbon capture. These technologies often rely on higher concentration of CO₂ at the source of carbon emissions. For example, these techniques may be common among oil and gas companies, or energy companies involved in extracting and/or burning fossil fuels. For example, flue gas may be a point source of carbon emissions. Point of source technologies may be built into certain combustion technologies or be more appropriate for existing industrial facilities such as power plants.

Alternatively, atmospheric carbon capture or direct air capture (DAC) of carbon emissions such as CO₂ may be used to offset emissions in industries where it may be more difficult to abate or prevent release (*i.e.,* hard-to-abate sectors) such as the transportation industry *(e.g.,* shipping and aviation). In some respects, DAC can be more challenging because it involves extracting carbon emissions such as CO₂ at ambient conditions (e.g., temperatures, pressure, concentrations) that are much lower than point of source techniques. Differences between point of source and DAC generally make point of source technologies inapplicable to DAC and vice versa. For example, technologies employed for point of source capture may have slow kinetics under ambient conditions which renders them inefficient or futile for DAC. Additionally, storage and/or further utilization of captured carbon (*e.g.,* CO₂) has conventionally been limited to point of source capture because efficiently extracting sufficient quantities from ambient air makes storage and further utilization difficult and/or expensive. In yet another example, DAC technologies may be implemented as large-scale facilities whereas point of source technologies may be retrofitted to existing facilities. Regardless, significant advances in these technologies may make them more promising to ultimately achieve carbon neutrality. For example, a U.S. patent application having Serial No. 18/162,326 filed on January 31, 2023, describes some advances in DAC and is hereby incorporated by reference in its entirety.

Traditional CO₂ capture involves using liquid sorbents, particularly amine-based solutions. Monoethanolamine (MEA) being the benchmark solvent due to its high reactivity with CO₂. Yet, traditional amine solvents have several significant drawbacks. Liquid amine solvents require high energy consumption for regeneration, the process of releasing captured CO₂ from the amine solution typically involves the application of heat, which can account for a substantial portion of the overall energy consumption of the CO₂ capture process, and the high energy demand reduces the overall efficiency of the system and increases operational costs. The combined effects of high energy consumption, corrosion, and solvent degradation contribute to the overall high operational costs of using liquid amines for CO₂ capture. These costs can be a significant barrier to the widespread adoption of this technology, particularly for industries with tight profit margins.

Solid amine sorbents and amine stripping technologies for regeneration have conventionally been incompatible with one another. Thus, solid sorbents (e.g., metal-organic frameworks, zeolites, or other porous materials) have conventionally been limited to DAC technologies and liquid sequestration has conventionally been limited to point of source technologies. For example, solid sorbent technologies have been tested with heated regeneration techniques. However, heated and pressurized regeneration techniques may be inefficient and/or lead to degradation of the sequestering materials such that longevity is limited. Liquid technologies may also have slow kinetics under low temperature, low pressure, and/or low concentration scenarios such that they are inapplicable for ambient conditions.

Therefore, conventional carbon capture technologies need improvements as they may be inefficient, costly, involve expensive or rare materials and/or include a number of drawbacks such as those discussed above. For example, some of the challenges include energy requirements for regeneration, limited longevity, the scale of deployment, the cost of the materials, and material degradation. The degradation of sorbent materials in carbon capture is a significant challenge impacting the overall efficiency and cost-effectiveness of the carbon capture processes. Factors such as exposure to contaminants, high temperatures, and the cyclic nature of the capture and release process can lead to physical and chemical changes in the sorbent material, resulting in reduced CO₂ capture capacity and selectivity. Contaminants present in flue gases or ambient air, such as sulfur compounds and particulate matter, can interact with the sorbent material, leading to fouling and reduced performance over time. Additionally, the high temperatures and pressures during the regeneration steps can cause mechanical stress and thermal degradation of the sorbent material. These costs can be a significant barrier to the widespread adoption of this technology, particularly for industries with tight profit margins.

Furthermore, on the utilization and storage side, the CO₂ emissions captured by conventional carbon capture technologies are typically not directly usable as valuable products, with only a few niche applications currently available. Beyond the implementation of carbon credits, a more sustainable and economically viable approach to financing CO₂ removal from the atmosphere involves converting captured CO₂ into more useful and marketable end-products. These end-products include carbon monoxide (CO), formic acid, methanol, and a variety of other carbon-based substances. By transforming CO₂ into valuable chemicals, industries can create a revenue stream that helps offset the costs associated with the carbon capture process. For instance, methanol can be used as a fuel or a feedstock in chemical manufacturing, while formic acid has applications in agriculture and leather production. Carbon monoxide, on the other hand, is a crucial component in the production of synthetic fuels and various industrial processes. Carbonates may be utilized in various industries such as construction or fertilizers.

Traditionally, to efficiently convert CO₂ to a useful end-product, the captured emissions must first be purified, pressurized, and transported to the conversion facility. Each of these steps incurs additional costs, losses, and challenges. Purification of CO₂ is a needed step to remove impurities that could hinder the efficiency of subsequent chemical reactions. This process often involves advanced filtration and separation technologies, which can be both energy-intensive and costly. Once purified, the CO₂ must be pressurized to facilitate its transport and subsequent chemical conversion. Pressurization requires significant energy input, adding to the overall cost and carbon footprint of the process. Transportation of CO₂ to conversion facilities presents another set of logistical challenges. Depending on the distance and the mode of transport such as pipelines, trucks, or ships, there are varying degrees of complexity, risks, and expense involved. Once at the conversion facility, the purified and pressurized CO₂ undergoes chemical reactions to transform it into valuable end-products. This stage requires sophisticated technology and catalysts to ensure high conversion efficiency and product yield.

Therefore, there is a need for a CO₂ capture system overcoming one or more drawbacks mentioned herein.

In one or more embodiment, a CO₂ capture system is disclosed. The system may be a system structured to sequester CO₂ from dilute sources. The system may be a DAC system. The system is arranged to capture CO₂ from air, atmosphere. The capture may be direct capture. The CO₂ may be anthropogenic CO₂, legacy CO₂, naturally produced CO₂, CO₂ from various sources such as decomposition CO₂, ocean release CO₂, respiration CO₂, industrial sources CO₂, deforestation CO₂, fossil fuel burning CO₂, transportation CO₂, fuel combustion CO₂, exhaust CO₂, the like, or their combination. Other sources of CO₂ may also be suitable for sequestration as described herein. Unless expressly indicated, it should be understood that the mechanism for sequestering CO₂ may occur through adsorption or absorption and is not particularly limited.

The capture systems and methods disclosed herein are a hybrid between conventional point of source and DAC technologies which augments and merges the benefits of both technologies while offsetting many of the drawbacks. The capture systems disclosed herein may include solid sorbents and regeneration processes that cycle one or more exchange fluids back and forth. Separating sequestration of carbon from its source and endothermic regeneration provides greater versatility and adopts the benefits of both technologies while also creating new advantages. Additionally, the herein-disclosed systems and associated processes have one or more advantages. The systems and process may contribute to mitigation of the sorbent degradation traditionally taking place during the temperature and pressure swings employed in the regeneration phase. Additionally, the separate regeneration and compression steps are eliminated due to integration of capture, conversion, mineralization, or a combination thereof, contributing to an overall efficiency. The system also takes advantage of using alternative compounds for the exchange fluid such as amino acids, enabling alternative, beneficial chemistry.

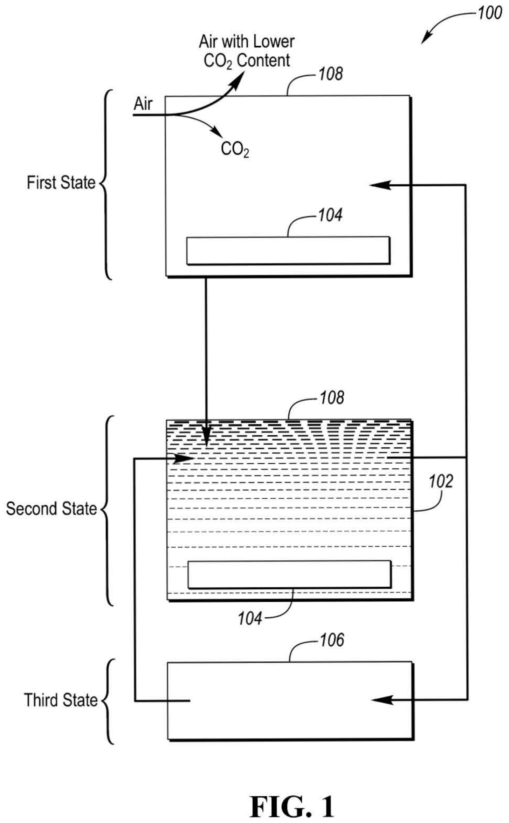

The system may have one or more portions, stages, states, or a combination thereof. The system may merge a solid sorbent with a liquid exchange fluid for regeneration of the solid sorbent. The system includes several components. The various components described herein may cooperate mechanically, physically, chemically, fluidly, or a combination thereof, such that they are described as being in mechanical, chemical, and/or fluid communication to achieve the structure, functions, examples described herein. Non-limiting examples of the systems disclosed herein are shown in Figs. 1-4.

The system disclosed herein includes at least one container. The system may include 2, 3, 4, 5, 6, or more containers. But the system may include a single container or just two containers. The container may be a reaction reactor, tank, vessel, compartment, canister, capsule, tub, chamber, cistern, flask, receptacle, or the like. The container may be a closed, enclosable, openable, sealable, and/or resealable container.

The container may include or house a solid CO₂ sorbent. The sorbent may include a porous support functionalized with one or more amine functional groups, molecules, or polymers attached on the support. The attachment may include immobilization, grafting, direct bond, or incorporation of non-volatile polymeric components such as coating. The porous support material itself may include functional amines. The porous material may include (meso)porous silica, cellulose, zeolites, polymers such as polymethylmethacrylate (PMMA) or polystyrene (PS). The porous material may have a high surface area *(e.g.,* at least about 100, 250, or 500 m²/g). A non-limiting example sorbent includes a cellulose monolith coated with polyethylene imine (PEI).

The sorbent may be structured as a solid substance such as granules within a reaction reactor. The sorbent may be configured as monolithic structures, mats, plates, sheets, film membranes, fabric, or otherwise. The sorbent may be structured as beads or particles immobilized in a fixed bed movable in a closed environment of a reactor/container. Non-limiting average particle size of the sorbent may be about 100 µm to 5 mm, 500 µm to 2 mm, or 1000 µm to 1 mm.

The sorbent is configured to have a selectivity and/or affinity for CO₂ such that it sequesters CO₂ from its gaseous state (e.g., atmospheric air). For example, the sorbent may be configured to deplete a volume of atmospheric air to less than about 380, 350, 300, 280, 250, 225, or 200 ppm.

The system may include several states, stages, or phases. In the first state, the functionalized portion of the sorbent reacts spontaneously with CO₂ to separate CO₂ from the air while the porous support material provides a high surface area for the amine/air interface, ensures thar the air can flow through the sorbent, and anchors the amines in the solid sorbent, preventing their volatilization. An efficient contact between the CO₂-laden air and the sorbent, especially its amine functionality, should be maintained for an adequate time interval to maximize CO₂ sequestration. During the first phase, the sorbent is effectively loaded with CO₂. During the first phase, the incoming ambient air has a first CO₂ concentration which is higher that a second CO₂ concentration after the CO₂ binds onto the sorbent. The air leaving the reaction reactor and the system thus has a second concentration of CO₂ lower than the first concentration.

The sorbent is subsequently regenerated via an exchange fluid in the second phase or state. In the second state, the sorbent material is exposed to an exchange fluid, which chemically adsorbs the CO₂ bound with the amine end-groups. Once the exchange fluid is loaded with CO₂, the exchange fluid is removed, and the sorbent material is rinsed with water, dried, and prepared for a new adsorption cycle. The sorbent may be periodically rinsed such as with water and/or dried or may be rinsed and dried prior to each new CO₂ sorbing cycle. The CO₂ may be bound in the exchange fluid in the form of carbamate, bicarbonate, carbonate, or a combination thereof.

In the third phase or state, the exchange fluid is regenerated in a regeneration device. The regenerated exchange fluid may be reentered into the system. The regeneration device may serve additional function such as convert CO₂ into carbonates for further utilization or storage in a solid form. A non-limiting example regeneration device may include a mineralization reactor.

A non-limiting example of the system is shown in Fig. 1. As can be seen, the system 100 of Fig. 1 may utilize an exchange fluid 102 which is shared and cycled between a reaction reactor 108 including a sorbent 104 and a regeneration device 106. The sorbent 104 and the regeneration device 106 may be separate from one another. In various embodiments, CO₂ is captured by the sorbent 104 from an input stream, depicted at A, containing CO₂. The sorbent 104 may be subsequently flooded with the exchange fluid 102 to regenerate the sorbent 104 in the reaction reactor 108. The exchange fluid 102 may sequester the CO₂ from the sorbent 104, thus removing the CO₂ from the sorbent 104. The sorbent 104 may be regenerated for further CO₂ sequestration from the source of CO₂ (e.g., atmospheric air). After regeneration of the sorbent 104, the CO₂-enriched exchange fluid 102 may be transferred to the regeneration device 106, where the CO₂ is separated from the exchange fluid 102. The exchange fluid 102 may be subsequently recycled back to the reaction reactor 108 for another regeneration cycle.

The regeneration device 106 may serve two functions: (1) regeneration of the exchange fluid and (2) in-situ conversion of captured CO₂ into an end-product which includes consumption of the sequestered/captured CO₂. The device 106 (206, 306, 406) is thus a dual-function device. The functions (1) and (2) may be simultaneous or consecutive. The regeneration of the exchange fluid may be utilizing one or more intermediates or products from the conversion reaction, for example hydroxyl ions (OH⁻), protons, electrons, or a combination thereof. The end-product may be non-gaseous, gaseous, liquid, solid, high-value, non-CO₂, or a combination thereof. The end-product may include the carbon atom from the sequestered and captured CO₂, thus binding the carbon from the ambient air in a non-CO₂ form. The end-product may include oxygen, carbon monoxide, an alcohol such as methanol, a carboxylic acid such as formic acid, or another carbon-based substance.

The regeneration device 106 which also serves a function of CO₂ conversion into useful chemical compounds, products, or intermediates for further production, is an in-situ reactor. In other words, the device 106 is physically a part of the disclosed system, adjacent or in the vicinity of the regeneration device 106. Because the system includes an in-situ conversion device, the system thus bypasses the need for a purified CO₂ intermediate, pressurization, and transport, hence increasing efficiency. The system may operate in a loop, allowing for continuous recycling of the sorbent and exchange fluid. The system may be configured as a batch process or a continuous operation system. The system may thus support circular economy and contribute to climate change mitigation.

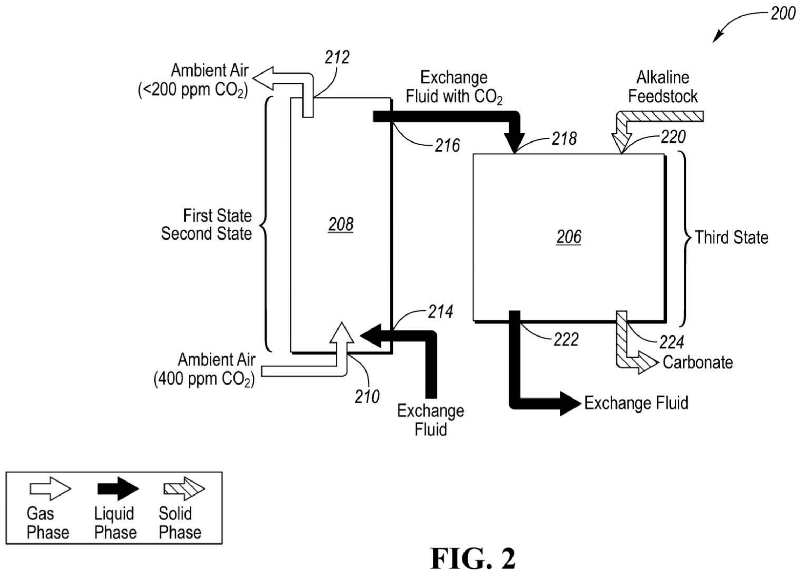

The regeneration device may be a mineralization reactor, a non-limiting example of which is shown in Fig. 2. A mineralization reactor is a vessel used to chemically convert CO₂ into carbonate such as calcium carbonate (CaCO₃) through a process called mineralization. Unlike naturally occurring mineralization which takes hundreds or thousands of years in which minerals inside rocks react with atmospheric CO₂ to create carbonates, the process in the mineralization reactor facilitates accelerated reactions between CO₂ and the minerals, resulting in a secure storage of CO₂.

The mineralization process may utilize alkaline feedstock to react with concentrated CO₂. The alkaline feedstock may include coal fly ash, steel slag, industrial alkaline waste, alkaline mine tailings, industrial by-products, mined rocks such as alkaline rocks rich in iron, calcium, magnesium, a calcium-rich material, or a combination thereof. The alkaline feedstock may include one or more oxides such as calcium oxide (CaO). The alkaline feedstock may assist with the regeneration, be a source of calcium ion, or both. The alkaline feedstock may be in the form of crushed particles.

The reactions in the mineralization reaction may be facilitated at ambient temperature and relatively low pressure or relatively high pressure, high temperature, or both. The temperature of the mineralization reaction may be about 15-90, 25-80, or 35-70°C. The reactions at ambient temperature for CO₂ storage in a solid form present an advantage in comparison to processes requiring high temperatures and pressures above ambient conditions.

In the mineralization reactor, CO₂ is reacted with divalent cations to create stable carbonate minerals. The resulting carbonate minerals may be further utilized in a variety of applications such as cement ingredients, fertilizer, source material for paper and paint.

The system may include a precipitation tank to remove the carbonate product in a solid form. The system may also include a filter to separate the regenerated exchange fluid before the fluid is returned for further sequestration.

The example of Fig. 2 shown a process of producing carbonates from CO₂. A specific non-limiting example may be production of CaCO₃ from CO₂ and CaO. As can be seen in the system 200 of Fig. 2, the reaction reactor 208 may facilitate the first and second states of the system shown in Fig. 1. The air with a higher concentration of CO₂ is brought into contact with a CO₂ sorbent for sequestration. Subsequently, an exchange fluid floods the reactor 208 to remove CO₂ from the sorbent. Subsequently, the exchange fluid enriched with CO₂ is brought to a mineralization reactor 206. An alkaline feedstock is also brought into the mineralization reactor 206 to facilitate a reaction with the CO₂. The exchange fluid is regenerated by removing CO₂ which reacts with the alkaline feedstock. The exchange fluid may be returned to the reaction reactor 208 for further CO₂ sequestration.

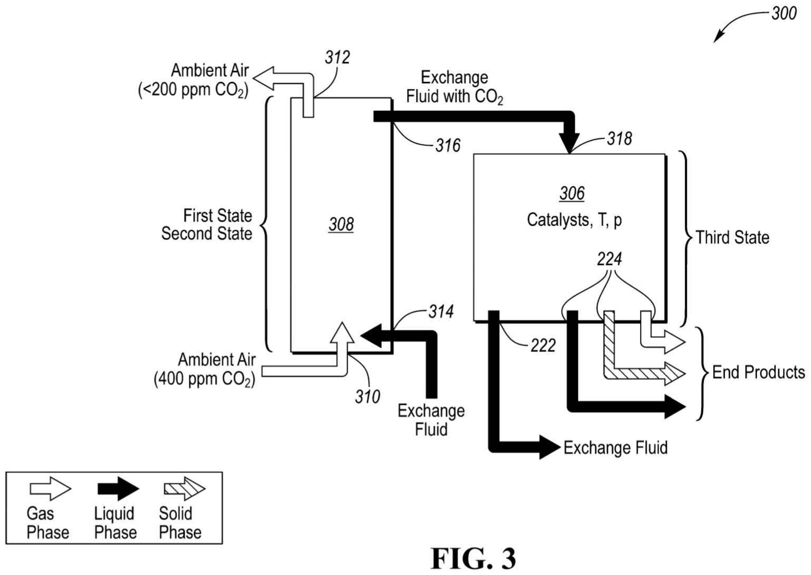

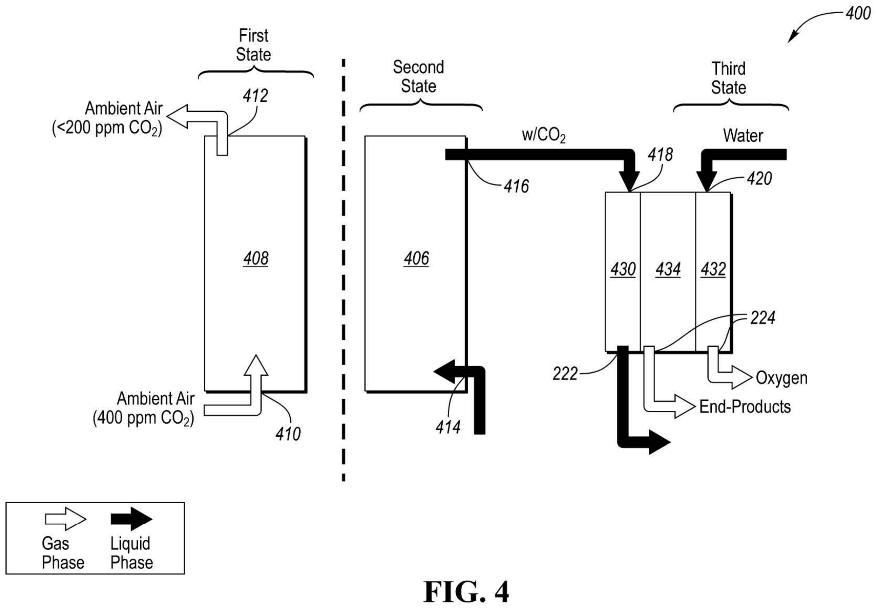

In another example, the regeneration device 106 of Fig. 1 may be a conversion unit 306, non-limiting examples of which are shown in Figs. 3 and 4. In the conversion unit, the captured CO₂ may be reduced through a thermal, chemical, thermochemical, or electrochemical pathway.

In the thermochemical pathway, the CO₂-laden fluid may be subjected to temperatures between about 50 and 200°C and/or pressures above about 1 bar in the presence of a catalyst, such as those based on silver (Ag), copper (Cu), nickel (Ni), platinum (Pt), palladium (Pd), or ruthenium (Ru) on different supports including zinc or aluminium oxides (ZnO and Al₂O₃). Other catalysts and oxides are contemplated. The appropriate combination of a catalytic system, temperature, and pressure may be selected to yield the desired end-product. The thermochemical pathway may be realized in a regeneration device 306. A catalytic system, elevated temperature, elevated pressure, or their combination may be present in the reactor or supplied to the reactor, as is shown in Fig. 3. The end-products' chemistry depends on the type of catalysts, temperature, and pressure introduced into the reactor 306. The end-products may include gaseous, liquid, solid products, or their combination.

A non-limiting depiction of the thermochemical reaction pathway is shown in Fig. 3. The system 300 includes a reaction reactor 308 containing the solid sorbent. The first and second phases take place in the reaction reactor 308. The third phase takes place in an adjacent regeneration reactor 306 which is also a conversion reactor for the captured CO₂.

In the electrochemical pathway, the exchange fluid may be introduced into an electrolysis cell, a non-limiting example of which is shown in Fig 4. At the anode, an oxidation reaction occurs (e.g., oxygen evolution), while at the cathode, the CO₂ is electrochemically reduced to various end-products in the presence of a catalyst. The two electrode compartments may be divided either by a proton-exchange-membrane, an anion exchange membrane, or a bipolar membrane obtained by combining a proton-exchange- and an anion-exchange-membrane.

A non-limiting example system including an electrolysis cell is shown in Fig. 4. The system 400 includes a reaction reactor 408, in which the first and second phases take place. The third phase takes place in the conversion reactor 406, which is an electrolysis cell 406 in this embodiment. The cell 406 includes a cathode 430, anode 432, and a membrane 434 dividing the electrodes 430 and 432. The end-products may include various reaction products including gas phase such as oxygen. The regenerated exchange fluid may be returned to the reaction reactor 408.

In the system disclosed herein, the exchange fluid may be depleted of the chemically bound CO₂ to an extent determined by the overall system requirements, typically ranging between about 10-100, 20-90, or 30-70% and is then regenerated for the next adsorption cycle. Simultaneously, the desired end-products may be collected, purified, stored, used in production, or a combination thereof.

The reaction reactors 108, 208, 308, 408 and regeneration devices 106, 206, 306, 406 may include one or more inlets and one or more outlets. For example, the reactor 208 may include a first inlet 210 to receive a gaseous supply stream/input and a first outlet 212 to expel or release the gaseous supply. The reactor 208 may further include a second inlet 214 to receive the exchange fluid from a regeneration module such as the mineralization reactor 206 and a second outlet 216 for discharging the CO₂-enriched exchange fluid from the sorbent compartment/reaction reactor 208 and transferring it to the regeneration module 206.

Likewise, the regeneration reactor, device, or module 106, 206, 306, 406 may include one or more inlets and one or more outlets. For example, the device 206 may include a first inlet 218 for ingress of the CO₂-enriched exchange fluid and a second inlet 220 for input of feedstock. The reactor 206 may also include a first outlet 222 for egress of the exchange fluid after being regenerated and a second outlet 224 for collection of carbonates. Analogous inlets and outlets are also depicted in Figs. 3 and 4.

The reaction reactors 108, 208, 308, 408 may also include an inlet for any feedstock or chemical compounds needed to assist the CO₂ sequestration. The chemical compounds may be a part of the exchange fluid. Alternatively or in addition, additional chemical compounds may be supplied to the reaction reactor, as needed, for example after the exchange fluid regeneration, *etc.*

The reaction reactor and the regeneration device may further include one or more conduits connecting the reaction reactor to the regeneration device. For example, the system may share a single conduit leading the exchange fluid back and forth between the reaction reactor to the regeneration device. Alternatively, the system may include two separate conduits, a first conduit for taking the enriched exchange fluid from the reaction reactor to the regeneration device and a second conduit for taking the regenerated exchange fluid from the regeneration device to the reaction reactor.

The first and second inlets may be separately sealable such that during a first period of time, the first inlet may permit a gaseous stream to enter the compartment and contact the sorbent while the second inlet is sealed. During a second period, the first inlet may be sealed while the second inlet is opened to flood the sorbent/compartment with the exchange fluid. Similarly, the first and second outlets may be selectively sealable for filling the compartment with a gaseous stream/exchange fluid or expelling/draining the compartment of the gaseous stream/the exchange fluid.

The first inlet or gaseous input may be positioned such that the input stream passes along *(e.g.,* over or through) the sorbent. The same aperture or port may serve as the inlet and outlet for gaseous stream and/or the exchange fluid. The container may provide a closed environment by being selectively contained, sealable, or sealed such that a mobile sorbent (e.g., beads/particles) and/or volatiles components such as in the exchange fluid are not released. In other words, the gas supply may be immobilized in the reaction reactor for a time sufficient for the sorbent to remove and sequester CO₂ therefrom. Alternatively, a continuous stream of air may be supplied.

During the first state, exposure of the CO₂ to the sorbent may be carried out until a threshold saturation level and/or capacity is achieved or duration of time sufficient for sorption is met. During the second state, exposure of the exchange fluid to the sorbent may be carried out until a threshold saturation level/limit/point and/or capacity is achieved or duration of time sufficient for regeneration is met. The exposure in either state may be carried out for a predetermined amount of time.

The threshold point/limit may be a reduction/increase in sequestering capacity by at least about 10, 15, 20, 25, 30, 35, 40, 45, 50, 55, 60, 65, 70, 75, 80, 85, 90, 95, 98, or 99%. The threshold saturation level/limit/point may be at least about 10, 15, 20, 25, 30, 35, 40, 45, 50, 55, 60, 65, 70, 75, 80, 85, 90, 95, 98, or 99% of the sorbing capacity. A period of time sufficient to achieve a threshold limit or range may be employed. For example, the sorbent may be exposed to a gaseous component and/or the exchange fluid may be exposed to the sorbent for a duration of time sufficient to utilize at least about 10, 15, 20, 25, 30, 35, 40, 45, 50, 55, 60, 65, 70, 75, 80, 85, 90, 95, 98, or 99% of the sorbing capacity of the sorbent/exchange fluid. In a non-limiting example, exposure may occur for duration of time sufficient to utilize about 20 to 90, 30 to 85, or 45 to 80% of the sorbing capacity, based on real, historical, or predicted conditions such as temperature, humidity, pressure, and the composition of atmospheric air.

The exchange fluid may be thus contacted with the sorbent after the sorbent reaches saturation or a threshold saturation for sorbing CO₂ or after a (e.g., predetermined and/or predicted) duration of time. The sorbent may be exposed to atmospheric air for a duration of time sufficient to sorb CO₂ beyond the threshold before the sorbent is flooded with the exchange fluid. Similarly, the exchange fluid may be contacted with the sorbent for a time sufficient to achieve a threshold saturation of the exchange fluid or free up a threshold capacity of the sorbent before the exchange fluid containing sequestered CO₂ is removed. A loaded/charged/CO₂ laden exchange fluid may be removed, evacuated, extracted from the sorbent after a threshold level is achieved and/or after a (predetermined/predicted) duration of time. The steps of contacting the exchange fluid to the sorbent may be repeated one or more times to extract CO₂ from the sorbent. Different streams/volumes of the same or different exchange fluids may be used.

The reaction reactor may be sized to hold a volume of exchange fluid configured to regenerate the sorbent in one, two, three, or more passes. The reaction reactor may be sized to hold a volume of exchange fluid such that the transfer of CO₂ from the sorbent to the exchange fluid is kinetically efficient *(i.e.,* the capacity to sequester CO₂ for the exchange fluid and sorbent is greater than 1:1, *e.g.,* a ratio of total sequestering capacity of the exchange fluid to sequestered CO₂ in the sorbent is greater than 1:1 or at least 2:1, 5:1, 10:1, 25:1, 50:1, 100:1, or at least 1,000:1). The reaction reactor may be sized to hold an excess amount of exchange fluid such that the exchange fluid in the rection reactor has a greater total capacity to sequester CO₂ than the CO₂ sequestered (or to be sequestered) by the sorbent. For example, the compartment housing the sorbent may be flooded with the exchange fluid.

As the sorbent may spontaneously sequester CO₂ from ambient air under ambient conditions, the sorbent, reaction reactor, CO₂ sequestration reactor, system, or their combination may be free of a heating element for heating the sorbent. In a conventional system, a heating element may be present in the CO₂ sorption device, for example for regeneration of the sorbent.

The herein-disclosed system may include a heating element, exclusively or only, in the third phase or the device 106, 206, 306, 406. In one or more embodiments, even the device 106, 206, 306, 406 may be free or a heating element. For example, if the device is a mineralization reactor, the device 206 may be free of a heating element and thus free of an elevated temperature, pressure, or both. If the device is a conversion device 306, 406, or both, the device may include one or more heating elements to facilitate temperature sufficient for the conversion processes including a thermal, thermochemical, or electrochemical reaction.

The heating elements may be placed inside, outside, or both of the regeneration device. The heating elements may be internal or external to the device. The device may be structured as a pressurized vessel.

The reaction reactor may be flooded with exchange fluid such that it is filled to about, at least about, or at most about 30, 50, 60, 75, 80, 85, 90, 95, 98, or 99% of its volumetric capacity.

The processes described herein may be repeated continuously or as batches. In a variation, repetitions of the first and second phases may be repeated a plurality of times *(e.g.,* 2, 3, 4, 5, 6, 7, 8, 9, 10) before proceeding to regeneration. Regeneration may be repeated a plurality of times to fully *(e.g.,* 2, 3, 4, 5, 6, 7, 8, 9, 10) regenerate the exchange fluid before contacting the regenerated exchange fluid with the sorbent again. The regenerated exchanged fluid may be cooled before being reintroduced to the sorbent.

The sorbent may sequester CO₂ from a gaseous stream such as atmospheric air while the exchange fluid is simultaneously regenerated. A conventional system not incorporating an intermediate exchange fluid cannot separate the task of removing CO₂ from air while simultaneously removing CO₂ from the system for further utilization or storage.

One or more steps described herein may be performed by a controller including a non-transitory memory with computer-executable instruction stored thereon and a processor for executing the computer-executable instructions. The steps such as sequestration or regeneration may be based on predicted conditions rather than actual conditions or based on proxy parameters. Predictions may be based on algorithms such as a machine learning algorithm. A machine learning algorithm may be implemented using artificial intelligence. The machine learning algorithm may be an algorithm that improves its accuracy through experience. The machine learning algorithm may enable one or more embodiments to learn and improve from the previous experience, and/or the data described herein without explicit programming. The machine learning algorithm may be a neural network algorithm. Neural networks, random forests, support vectors, k-nearest neighbors, symbolic regression algorithms may be trained to recognize complex patterns within the data and learn to represent non-linear relationships between the data and predict trends. The machine learning algorithm may be implemented as machine instructions on non-transitory memory stored on a computer where the machine instructions are to be executed by the computer.

For example, historical, predicted, or current weather or environmental conditions may be used to predict CO₂ concentration in ambient air, the appropriate duration of time for sequestration, improve efficiency of the systems described herein, or a combination thereof.

The processor may include one or more devices selected from high-performance computing systems including high-performance cores, microprocessors, micro-controllers, digital signal processors, microcomputers, central processing units, field programmable gate arrays, programmable logic devices, state machines, logic circuits, analog circuits, digital circuits, or any other device that manipulate signals (analog or digital) based on computer-executable instructions residing in the memory. The memory may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information. The non-volatile storage may include one or more persistent data storage devices such as a hard drive, optical drive, tape drive, non-volatile solid-state device, cloud storage or any other device capable of persistently storing information.

Executable instruction may reside in a software module. The software module may include operating systems and applications. The software module may be compiled or interpreted from a computer program created using a variety of programming languages and/or technologies, including, without limitation, and either alone or in combination, Java, C, C++, C#, Objective C, Fortran, Pascal, Java Script, Python, Perl, and PL/SQL. Non-volatile storage may also include data supporting the functions, features, calculations, and processes.

Computer readable storage media (e.g., memory), which is inherently non-transitory, may include volatile or non-volatile, and removable and non-removeable tangible media implemented in any method or technology for storage of information, such as computer-readable instructions, data structures, program modules, or other data. Computer readable storage media may further include RAM, ROM, erasable programable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device form of a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement functions, acts, and/or operations described herein. The functions, acts, and/or operations described herein may be re-ordered, processed serially, and/or processed concurrently.

The exchange fluid, used for regeneration of the sorbent, may have at least one component with an affinity and/or selectivity for CO₂ such that the exchange fluid sequesters CO₂ away from the sorbent. Thus, the exchange fluid may be used to regenerate the sorbent when contacted with the sorbent for a sufficient amount of time (e.g., at least 1, 5, 15, 30, 45, or 60 minute). The exchange fluid may be configured to sequester CO₂ from the sorbent at relatively low temperature *(e.g.,* less than about 50, 75, or 100°C), at relatively low pressure *(e.g.,* less than about 1, 2, 3, 4, or 5 atmospheres), and/or ambient conditions (e.g., about 20 to 25°C and 0.5 to 1.5 atm). The CO₂ sequestration may be spontaneous under relatively low temperature and pressure or at ambient conditions such that an energy input is not necessary to facilitate sequestration/sorbing.

The exchange fluid (or components therein) may be chosen such that CO₂ has a greater affinity for the exchange fluid (or components therein) compared to the sorbent. In various embodiments, the exchange fluid (or components therein) may be chosen on the basis of their binding energy with CO₂. The exchange fluid (or components therein) may be chosen such that the binding energy between the exchange fluid (or components therein) and CO₂ is larger than that between the sorbent and CO₂.

The CO₂ may bind to one or more components in the exchange fluid such as to one or more functional groups in the exchange fluid. The functional groups in the exchange fluid may form a complex with CO₂.

The exchange fluid may be primarily a liquid such as a solution, emulsion, or dispersion. The exchange fluid may be a water-based solution. The exchange fluid may include one or more compounds having one or more nitrogen atoms. The exchange fluid may include one or more nitrogen-containing or nitrogen-group-containing compounds. The exchange fluid may include one or more amines, amino acids, neutralizing agents, of their combination. The exchange fluid may be free of one or more amines, amino acids, or neutralizing agents.

The one or more nitrogen-containing or nitrogen-group containing compounds may include amines. The exchange fluid may include one or more amines. An amine is a compound having a nitrogen atom with a lone pair of electrons. The nitrogen atoms in the exchange fluid are not merely nitrogen gas (*e.g.,* N₂). The amine may include a primary amine, secondary amine, tertiary amine, or their combination. The amines may have a formula R-NH₂, R₂-NH, or R₃-N. The CO₂ may be sequestered such that the ionic form has a -1 charge, *i.e.,* one extra electron per mole of CO₂ or close to such form, e.g., electrons per mole is less than 5, or less than 3, or less than 2. In other words, CO₂ may be sequestered such that the addition of one electron (per sequestered CO₂ molecule) may be added to release the bound CO₂. For example, CO₂ may be sequestered in the form of carbamate, bicarbonate, the like, or a mixture thereof.

The one or more amines may include one or more (or be selected from the groups consisting of) aqueous amines, water-lean amines, amino acids, amidines, guanidine and its derivatives, and/or mixtures thereof.

Aqueous amines include amines that may be used to form water-based solutions of amines. Aqueous amines may include amines miscible and/or soluble in water. Aqueous amines may have a solubility of at least 1, 10, 100, 500, or 1000 mg/L at 25°C. Non-limiting examples of suitable aqueous amines may include monoethanolamine (MEA), diethalolamine (DEA), triethylamine (TEA), triethanol amine (TEOA), ethylenediamine (EDA), diethylenetriamine (DETA), triethylenetetramine (TETA), 2-(2-Aminoethyl-amino)ethanol (AEEA), 2-amino-2-methyl-1-propanol (AMP), piperazine (PZ), piperazine derivatives, or their combination.

Water-lean may refer to compounds that do not intentionally include water, compounds that only have insignificant or trace amounts of water or are free of water. For example, a water-lean amine may include a mixture of an organic diluent and an amine. Water-lean may refer to compounds with low water content such as less than about 0.01, 0.1, 0.5, or 1% by weight, based on a total weight of the compound. Water-lean components may include organic solvents, alcohols, or a mixture thereof. The one or more water-lean amines may be liquid at room temperature and be referred to as amine or water-lean amine solvents. For example, suitable water-lean amines may include N-(2-ethoxyethyl)-3-morpholinopropan-1-amine (EEMPA); N1-(2-ethoxyethyl)-N2,N2-diisopropylethane-1,2-diamine (EEDIDA), 3-methoxy-N-(pyridin-2-ylmethyl)propan-1-amine (MPMPA), or 2-morpholino-N-(pyridin-2-ylmethyl)ethan-1-amine (MPMEA). The water-lean amine may include a compound represented by formula (1):

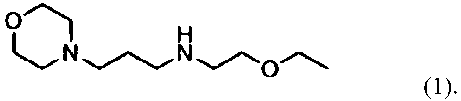

The water-lean amine may include a compound represented by formula (2):

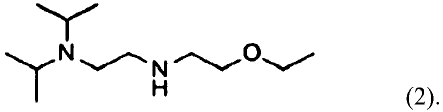

The water-lean amine may include a compound represented by formula (3):

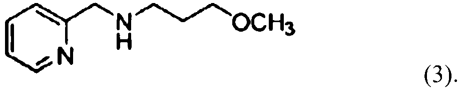

The water-lean amine may include a compound represented by formula (4):

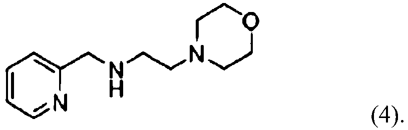

The water-lean amine may be a mixture of two or more of the compounds represented by formulas 1-4.

The exchange fluid may include at least one or one or more *(e.g.,* a mixture of) amino acids. An amino acid is an organic compound having both an amino functional group (-NH₂) and a carboxylic acid functional group (-COOH). Suitable amino acids may include alanine, arginine, asparagine, aspartic acid, cysteine, glycine, glutamic acid, glutamine, histidine, isoleucine, leucine, lysine, methionine, phenylalanine, proline, pyrrolysine, serine, selenocysteine, threonine, tryptophan, tyrosine, and valine. The R or L stereochemical configuration of the amino acids may be used. In a non-limiting example, L-arginine may be used. The amino acids may include a primary amine group or secondary amine group (proline). The amino acids may include the amino group in their "R" chain. The amino acids may include one or two primary amine groups in their structure.

Amidines are organic compounds with the functional group RC(NR)NR₂, where the R can be the same or different. Amidines include two nitrogen atoms. Amidines are the imine derivatives of amides (RC(O)NR₂). Non-limiting example amidines include formamidine with the formula of HC(=NH)NH₂, diminazene, benzamidine with the formula C₆H₅C(NH)NH₂, pentamidine, paranyline, or the like.

Guanidine is a compound with the formula HNC(NH₂)₂. Guanidine is a strong base which dissolves in polar solvents. Guanidine derivatives, guanidines, are a group of organic compounds sharing a common functional group with the general structure of (R₁R₂N)(R₃R₄N)C=N-R₅ and having a central bond of an imine. Examples of guanidines includes arginine, triazabicyclodecene, and creatine.

The one or more nitrogen-containing or nitrogen-group-containing components (e.g., the one or more amines) may be present in an amount of about, at least about, or at most about 5, 6, 7, 8, 9, 10, 11, 12, 13, 14, 15, 16, 17, 18, 19, 20, 21, 22, 25, 30, 35, 40, 45, 50, 55, 60, 65, 70, 75, 80, 85, 90, 95, 99, or 100 % by weight of the exchange fluid. The one or more nitrogen-containing or nitrogen-group-containing components (e.g., the one or more amines) may be present in an amount of about 5-90, 10-75, or 25-45 wt.%, based on the total weight of the exchange fluid. The weights and/or concentrations described herein with reference to the exchange fluid may be before or after sequestering CO₂, however, unless explicitly mentioned, the amount refers to weights or concentrations pre-sequestration.

In one or more embodiments, the nitrogen-group-containing compound (e.g., one or more amines) may be present in a concentration of about, at least about, or at most about 0.5, 1, 1.5, 2, 2.5, 3, 3.5, 4, 4.5, 5, 5.5, 6, 6.5, 7, 8, 9, 10, 11, 12, 13, 14, 15, 16, 17, 18, 19, 20, 21, 22, 23, 24, or 25 M. The amines may be present in an amount of about 2-20, 4-15, or 6-9 M. In a non-limiting example, 7.0 M MEA and/or 8.0 M PZ may be used.

The exchange fluid may include an alcohol or a mixture of alcohols. The exchange fluid may include a mixture of water and one or more alcohols. For example, suitable alcohols may include methanol, ethanol, propanol (e.g., 1-propanol or propan-2-ol/isopropanol), butanol, pentanol, and/or hexanol. Other suitable alcohols include glycols (e.g., ethylene glycol, propylene glycol), glycerol, xylitol, sorbitol, or other suitable alcohol. The alcohol may have up to 20 carbons (C₁-C₂₀), or up to 16 (C₁-C₁₆), or up to 14 (C₁-C₁₄), or 12 (C₁-C₁₂), or 10 (C₁-C₁₀), or 8 (C₁-C₈). A linear alcohol may be used.

The exchange fluid may also include a neutralizing agent such as a neutralizing base. A neutralizing agent such as a neutralizing base is a compound with a general formula MOHₓ, where M belongs to the alkali or alkaline earth metals. For example, a salt such as sodium hydroxide (NaOH) and/or potassium hydroxide (KOH) may be used in an amount sufficient to neutralize the one or more nitrogen-group containing compounds. In various embodiments, a base may facilitate CO₂ adsorption, the transfer of CO₂ from the sorbent to the exchange fluid, and/or influence the chemical form of the sequestered CO₂ in the exchange fluid. For example, sequestering CO₂ in a carbamate and/or bicarbonate form may reduce regeneration demands.

A component in the exchange fluid such as the nitrogen-group-containing compound or amine may have an adsorption energy/enthalpy of about, at least about, or at most about 30, 35, 40, 45, 50, 55, 60, 65, 70, 75, 80, 85, 90, 95, 100, 102, 110, 115, or 120 kJ/mol.

One or more volumes of the exchange fluid may be used. The volumes may be the same or different, for example regarding their composition, presence or absence of the neutralizing agent, the like, or their combination. A first volume of exchange fluid may be contacted with the sorbent for regeneration of the sorbent and removed, then a second volume of exchange fluid may be contacted with the sorbent for further regeneration. The second volume of exchange fluid may have the same or a different composition than that of the first volume of exchange fluid. For example, both the first and second volumes of exchange fluids may include the same amino acid mixture. Having multiple fresh (unexposed) volumes may improve kinetics of sequestering CO₂ from the sorbent.

The second volume of the exchange fluid may have a different composition than the first volume. In a non-limiting example, the first volume of the exchange fluid may have better kinetics when the sorbent has high saturation, and the second volume of the exchange fluid may have better kinetics when the sorbent has low saturation. In a non-limiting example, the first volume of exchange fluid may include an alcohol-amidine mixture, and the second volume of the exchange fluid may include an amino acid mixture. The first and second volumes of the exchange fluid may have different sequestering power, *i.e.,* one may have a greater sequestering power compared to the other.

### EXAMPLES

### Examples 1 and 2

The system included portions as described in Figs. 1 and 2. The process began with a monolith coated with polyethylene imine (PEI) being exposed to ambient air flow until the amine-based sorbent became fully loaded, chemically binding the CO₂ as carbamate. Once the adsorption step was complete, the monolith was flooded with an exchange fluid. The exchange fluid was a water-based solution containing at least one deprotonated amino acid with the general formula (5):

HₓN-CHR-COOH (5),

or in its deprotonated form may be represented by formula (6):

HₓN-CHR-COO⁻ (6).

where
x is 2; and
R is a hydrogen or carbon group.

In formulas (5) and (6), R may be a hydrogen, C₁-C₁₀₀ alkyl, aryl, or alkylaryl. R may be a C₁-C₄₀ alkyl, a C₁-C₂₀ alkyl, or C₁-C₈ alkyl.

The one or more amino acids sequestered CO₂ from the nitrogen-containing functional groups (e.g., amine or imine groups) of the solid sorbent to form carbamates. The reaction is represented by formula (7):

2 ⁻OOC-CHR-NH₂ + CO₂ → ⁻OOC-CHR-NHCOO⁻ + ⁻OOC-CHR-NH₃⁺ (7),

where
R is a hydrogen or carbon group. R may be a hydrogen, C₁-C₁₀₀ alkyl, aryl, or alkylaryl. R may be a C₁-C₄₀ alkyl, a C₁-C₂₀ alkyl, or C₁-C₈ alkyl.

In the presence of water or a base, the carbamate further reacted forming bicarbonate salts, with the now free amine group able to again react with CO₂. At high pH, the reaction proceeded further, producing carbonate ions. The reaction is represented by formula (8):

⁻OOC-CHR-NHCOO⁻ + ⁻OOC-CHR-NH₃⁺ + H₂O → ⁻OOC-CHR-NH₂ + ⁻OOC-CHR-NH₃⁺ + HCO₃⁻ + HCO₃⁻ (8),

where
R may be a hydrogen or carbon group. R may be a hydrogen, C₁-C₁₀₀ alkyl, aryl, or alkylaryl. R may be a C₁-C₄₀ alkyl, a C₁-C₂₀ alkyl, or C₁-C₈ alkyl. This may be rewritten as shown in formula (9), which demonstrates that in (8), the amino acid (⁻OOC-CHR-NH₂) was reformed and can then react with another CO₂ and H₂O to form another bicarbonate and ⁻OOC-CHR-NH₃⁺:

   ⁻OOC-CHR-NH₂ + CO₂ + H₂O → ⁻OOC-CHR-NH₃⁺ + HCO₃⁻ (9),
where
R may be a hydrogen or carbon group. R may be a hydrogen, C₁-C₁₀₀ alkyl, aryl, or alkylaryl. R may be a C₁-C₄₀ alkyl, a C₁-C₂₀ alkyl, or C₁-C₈ alkyl.

Various exchange fluids may be used. The exchange fluid may include amidines such as 1,8-diazabicyclo[5.4.0]undec-7-ene (DBU), diminazene, benzamidine, pentamidine, and/or paranyline. A mixture of the exchange fluid components described herein may be used. For example, a mixture of a nitrogen-group-containing compound (e.g., amines, amides, amino acids, imines, amidines, guanidines) and a water-lean solvent such as an organic solvent and/or an alcohol may be used.

In another non-limiting example, a suitable amino acid with a sufficiently high adsorption energy (enthalpy) disclosed herein may be selected. In a non-limiting example, a water-based solution of 1M L-Glycine (where R: H) or 1M L-Arginine (where R: HN=C(NH₂)-NH-(CH₂)₃) may be used.

### Example 1

After allowing sufficient time for the adsorption process, the CO₂-loaded fluid was then conveyed to the next step: CO₂ mineralization and exchange fluid regeneration. In this step, CaO was added to the solution, releasing Ca and hydroxyl ions, as is shown in reaction (10):

CaO + H₂O → Ca(OH)₂ → Ca²⁺ + 2OH⁻ (10).

The Ca ions further reacted with the carbonate ions producing insoluble CaCO₃, which was then precipitated and separated. In parallel, one of the two hydroxyl ions regenerated the amino acid solution, which was then removed and supplied to the sequestration reaction reactor for successive adsorption cycles. The second hydroxyl ion formed carbonate. The carbonate production reaction is shown in formulas (11a) and (11b), and the amino acid regeneration is shown in formula (12):

HCO₃⁻ +OH⁻ → CO₃²⁻ + H₂O (11a),

Ca²⁺ + CO₃²⁻ → CaCO₃ (11b),

⁻OOC-R-CH-NH₃⁺ + OH⁻ → H₂O + ⁻OOC-R-CH-NH₂ (12).

### Example 2

After allowing sufficient time for the adsorption process, the CO₂-loaded fluid was then conveyed to the next step: electrolysis cell and exchange fluid regeneration. At the anode, oxygen was evolved in the presence of an iridium oxide catalyst system producing the protons and electrons (13):

2H₂O → 4H⁺ + 4e⁻ + O₂ (13),

Simultaneously, at the cathode, the CO₂ in either carbamate (14) or bicarbonate (15) form was directly reduced to carbon monoxide on a silver-based catalyst consuming the protons and electrons produced on the other electrode:

2⁻OOC-R-CH-NHCOO⁻ + 2⁻OOC-R-CH-NH₃⁺ + 4H⁺ + 4e⁻ → 2CO + 2OH⁻ + 2⁻OOC-R-CH-NH₂ + 2⁻OOC-R-CH-NH₃⁺ (14).

2⁻OOC-R-CH-NH₃⁺+ 2HCO₃⁻+ 4H⁺ + 4e⁻ → 2CO + 2H₂O + 2OH⁻ + 2⁻OOC-R-CH-NH₃⁺ (15).

Once the CO was formed, the amino acid reacted further with produced hydroxyl ions regenerating the solution to its original state (16, 17):

2CO + 2OH⁻ + 2⁻OOC-R-CH-NH₂+ 2⁻OOC-R-CH-NH₃⁺ → 2CO + 2H₂O + 4⁻OOC-R-CH-NH₂ (16),

2CO + 2H₂O + 2OH⁻ + 2⁻OOC-R-CH-NH₃⁺ → 2CO + 4H₂O + 2⁻OOC-R-CH-NH₂ (17).

The produced CO was separated and collected, while the regenerated solution was removed as a ready-to-use fluid for successive adsorption cycles.

### Example 3

A solid amine-functionalized ion exchange resin sorbent was exposed to ambient air for a duration (e.g., at least 1 minute and up to 3 hours) sufficient to become saturated with CO₂. Then, a mixture of hexanol and DBU at a molar ratio of 1:1 was introduced, as the exchange fluid, to the saturated sorbent for a duration (e.g., 1 to 60 minutes) sufficient to sequester CO₂ from the solid sorbent. The loaded exchange fluid was then mixed with a carbon supported palladium catalyst at 50°C and 60 bars of pressure with a supply of pressurized hydrogen (H₂) in a thermochemical reactor for 8 hours to produce formic acid. Gas-liquid separation and liquid-liquid separation followed using distillation columns and reboilers to retrieve the formic acid and the regenerated exchange fluid before recirculating back to the sorbent for further sorbent regeneration.

### Example 4

A solid amine-functionalized ion exchange resin sorbent was exposed to ambient air for a duration (*e.g*., at least 1 minute and up to 3 hours) sufficient to become saturated with CO₂. Then EEMPA was introduced, as the exchange fluid, to the saturated sorbent for a duration (*e.g*., 1 to 60 minutes) sufficient to sequester CO₂ from the solid sorbent. The loaded exchange fluid (6-10 wt.% loading) was then mixed with a platinum catalyst (*i.e.,* Pt/TiO₂ and Pt/CeO₂) at 5 wt.% at 170°C-190°C and 60 bars of pressure with a supply of pressurized hydrogen (H₂) in a thermochemical reactor for 12 hours to produce methanol. Gas-liquid separation and liquid-liquid separation followed to retrieve methanol and the regenerated exchange fluid before recirculating back to the sorbent for further sorbent regeneration.

### Example 5

A solid amine-functionalized ion exchange resin sorbent was exposed to ambient air for a duration (*e.g*., at least 1 minute and up to 3 hours) sufficient to become fully saturated with CO₂. Then, a mixture of TEA and ethanol at a molar ratio of 1:1 was introduced, as the exchange fluid, to the saturated sorbent for a duration (*e.g*., 1 to 60 minutes) sufficient to sequester CO₂ from the solid sorbent. The loaded exchange fluid was then mixed with an activated catalyst mixture of 55.7 wt.% Cu, 26.8 wt.% ZnO, 5 wt.% Al₂O₃ at 170°C and 60 bars of pressure with a supply of pressurized hydrogen (H₂) in a thermochemical reactor for 16 hours to produce methanol. Gas-liquid separation and liquid-liquid separation followed to retrieve methanol and the regenerated exchange fluid before recirculating back to the sorbent for further sorbent regeneration.

### Example 6

A solid amine-functionalized ion exchange resin sorbent was exposed to ambient air for a duration (*e.g*., at least 1 minute and up to 3 hours) sufficient to become fully saturated with CO₂. Then, EEMPA was introduced, as the exchange fluid, to the saturated sorbent for a duration (*e.g*., 1 to 60 minutes) sufficient to sequester CO₂ from the solid sorbent. The loaded exchange fluid was then mixed with a heterogenous ruthenium catalyst at 170°C and less than 15 bars of pressure with a supply of pressurized hydrogen (H₂) in a thermochemical reactor for 16 hours to produce methanol. Gas-liquid separation to retrieve methane and liquid-liquid separation followed to retrieve the regenerated exchange fluid before recirculating back to the sorbent for further sorbent regeneration.

### Example 7

A solid amine-functionalized ion exchange resin sorbent was exposed to ambient air for a duration (*e.g*., at least 1 minute and up to 3 hours) sufficient to become fully saturated with CO₂. Then, an amino acid exchange fluid having L-Lysine was introduced, as the exchange fluid, to the saturated sorbent for a duration (*e.g*., 1 to 60 minutes) sufficient to sequester CO₂ from the solid sorbent. The loaded exchange fluid was then mixed with a ruthenium complex at 145°C at 2-20 bars of pressure in a thermochemical reactor for at least 30 minutes to produce formate. Separation and purification methods were then used to separate and purify the formate and the exchange fluid.

The following application is related to present applications: U.S. Pat. Appln. Serial No. 18/162,326, filed January 31, 2023 (RBPA 0421 PUS) and U.S. Pat. Appln. Serial No. 18/347,614, filed July 6, 2023 (RBPA 0421 PUS1) and U.S. Pat. Appl. Ser. Nos. (RBPA0527PUS, RBPA0528PUS, RBPA0529PUS, RBPA0530PUS, RBPA0531PUS, and RBPA0532PUS), filed on , which are incorporated by reference in their entirety herein.

The processes, methods, or algorithms disclosed herein may be deliverable to or implemented by a processing device, sensor, transponder, controller, or computer, which may include any existing programmable electronic control unit or dedicated electronic control unit. Similarly, the processes, methods, or algorithms may be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms may also be implemented in a software executable object. Alternatively, the processes, methods, or algorithms may be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, *etc.* As such, to the extent any embodiments are described as less desirable than other embodiments or prior art implementations with respect to one or more characteristics, these embodiments are not outside the scope of the disclosure and can be desirable for particular applications.

## Claims

1. A direct air capture (DAC) of CO₂ system comprising:
a reaction reactor having a solid, amine-functionalized sorbent configured to sequester CO₂ from air;
an in-situ dual-function device configured as a CO₂ conversion reactor and an exchange fluid regeneration device; and
the exchange fluid, recirculating between the reaction reactor and the dual-function device, configured to capture the sequestered CO₂ from the solid sorbent in the reaction reactor and release the captured CO₂ in the conversion reactor, the exchange fluid including one or more amino acids.

2. The system of claim 1, wherein the CO₂ conversion reactor includes one or more catalysts to facilitate a thermochemical reaction consuming the captured CO₂.

3. The system of claim 1, wherein the system produces a non-CO₂ gaseous end-product having a carbon atom from the sequestered CO₂.

4. The system of claim 1, wherein the CO₂ conversion reactor includes one or more heating elements for a thermochemical reaction consuming the captured CO₂.

5. The system of claim 1, wherein the one or more amino acids include an L-form of the one or more amino acids.

6. The system of claim 1, wherein the exchange fluid is supplied as at least two separate volumes having different chemical composition.

7. The system of claim 1, wherein the reaction reactor and the dual-function device are connected by one or more exchange fluid conduits.

8. The system of claim 1, wherein the exchange fluid regeneration and the CO₂ conversion reaction are consecutive reactions within a same volume of the dual-function device.

9. A regeneration reactor of a direct air capture (DAC) system comprising:
a container having
a first inlet structured for ingress of sequestered CO₂-enriched amino acid-based exchange fluid;
a second inlet for ingress of one or more catalysts facilitating a reaction consuming the incoming CO₂;
one or more heating elements; and
an outlet for egress of a non-CO₂ gaseous end-product having a carbon atom from the sequestered CO₂.

10. The regeneration reactor of claim 9, wherein the first inlet is also structured as an outlet for egress of amino acid-based exchange fluid from the container.

11. The regeneration reactor of claim 9, wherein the amino acid-based exchange fluid includes a mixture of amino acids.

12. The regeneration reactor of claim 9, wherein the container is a pressurized container.

13. The regeneration reactor of claim 9, further including an internal volume structured to facilitate a removal of CO₂ from the exchange fluid and CO₂ conversion into the non-CO₂ gaseous end-product having the carbon atom from the sequestered CO₂.

14. The regeneration reactor of claim 9, wherein the container is a mineralization device.

15. The regeneration reactor of claim 9, wherein the container is an electrochemical cell.

16. A direct air capture (DAC) system comprising:
a reaction reactor including an amine-functionalized solid sorbent configured to sequester CO₂ with a first affinity for CO₂;
an ingress of atmospheric air including CO₂ to be sequestered; and
a regenerable exchange fluid configured to bind CO₂ with a second affinity for CO₂, the second affinity being greater than the first affinity, the exchange fluid including one or more amino acids.

17. The system of claim 16 further comprising an in-situ regeneration reactor configured to remove a predetermined amount of CO₂ from the exchange fluid.

18. The system of claim 17, wherein the regeneration reactor includes one or more compounds reacting with the CO₂ removed from the exchange fluid to generate a non-CO₂ end-product and including a carbon atom from the CO₂.

19. The system of claim 16 further comprising an outlet for air having a lower concentration of CO₂ than the atmospheric air entering the system.

20. The system of claim 16, wherein the CO₂ in the exchange fluid is bound in a form or carbamate, bicarbonate, or their combination.
